# EUROPEAN PATENT APPLICATION

(11) **EP 1 589 626 A1**
(43) Date of publication of application: **26.10.2005**
(21) Application number: 05447020.8
(22) Date of filing: 09.02.2005
(51) Int. Cl.: H02G 3/32

(54) **Snap-fitting suspension assembly for cable trays**

(30) Priority: 19.04.2004 BE 200400202
(71) Applicant: Vergokan, 9700 Oudenaarde (BE)
(72) Inventor: Vergalle, Steven, 9700 Oudenaarde (BE)
(74) Representative: Sarlet, Steven Renaat Irène

(57) **Abstract**

Suspension assembly (1) for cable trays comprising a support bracket (2) which is provided to be fixed to a wall, a ceiling, a support beam or the like and a pillar (3) which is provided with support elements (5) for attachment of a cable tray or a cable tray support, the pillar (3) being suspendable on the support bracket (2), the pillar and the support bracket together being provided with at least one pair of complementary snap-fitting suspension elements (4, 5). The at least one pair of the complementary snap-fitting suspension elements is preferably formed by a resilient protruding element (4) and a complementary hole or recess (5) for accommodating the protruding element (4). In a preferred embodiment, the pillar (3) and the support bracket (2) have complementary shaped parts which are formed by first and second tubular bodies (3, 6), the dimensions of which are chosen such that the first tubular body (3) tightly fits within the second tubular body (6) or vice versa, the complementary snap-fitting suspension elements (4, 5) being incorporated into opposing walls of the first and second tubular bodies.

## Description

The invention relates to a suspension assembly for cable trays according to the preamble of the first claim.

"Cable trays" is a name given to a form of channel or tray along which cables pass and are supported throughout buildings and other installations so as to allow the cables to be held, for example, near the ceiling, or walls and generally out of reach, and ensuring that the cables are passed safely between start and end points to allow transfer of electricity, data and the like.

GB-A-2 390 753 describes a suspension assembly for cable trays which comprises a support bracket which is attached to the ceiling or a support beam and a pillar which is suspended in a boltless manner on lugs of the support bracket. The pillar has a series of spaced apertures which enable the attachment of a cable tray support, on which in turn the cable support is attached.

The suspension assembly known from GB-A-2 390 753 however has the disadvantage of being difficult to assemble. The assemblage of the suspension assembly comprises the following successive steps: fixing the support bracket to the ceiling or support beam, suspending the pillar on the support bracket, attaching the cable tray support to the pillar and finally attaching the cable tray to the cable tray support. Each of these steps is performed near the ceiling, i.e. at a height above the floor which requires the workers to stand on ladders or platforms or the like.

It is therefore an aim of the present invention to provide a suspension assembly for cable trays by means of which most of the assemblage can be performed at a lower height.

This aim is achieved with the suspension assembly showing the characteristics of the characterising part of claim 1.

The suspension assembly for cable trays according to the invention comprises a support bracket which is provided to be fixed to a wall, a ceiling, a support beam or the like and a pillar which is provided with support elements for the direct attachment of a cable tray, or the attachment of a cable tray support to which in turn the cable tray can be attached. For suspending the pillar on the support bracket, the pillar and the support bracket together are provided with at least one pair of complementary snap-fitting suspension elements.

As a result of the snap-fitting suspension of the pillar on the support bracket, the assemblage of the cable tray suspension assembly according to the invention can be performed by the following sequence of successive steps: attaching cable tray supports to the pillars, attaching the cable tray to the cable tray supports and building a cable tray structure, fixing the support brackets on the desired locations on the wall or ceiling or on support beams, lifting the cable tray structure and suspending it by snap-fitting the pillars onto the support brackets. This shows that the cable tray structure can be substantially fully assembled on the floor or at a low level, without requiring workers to stand on ladders or platforms except for the final step of suspending the cable tray structure. As a result, the safety of the workers can be enhanced with the suspension assembly of the invention, since the risk of falling from a ladder or height platform no longer exists during most of the assemblage. Furthermore, by the ability to assemble on the floor the assemblage becomes less tiring for the workers, since the number of steps to be performed with their arms raised is greatly reduced.

The snap-fitting connection also has the advantage that there is no need for bolts or equivalent attachment means for attaching the pillar to the support bracket. However, a bolt may be placed to secure the pillar and the support bracket together if desired. The snap-fitting connection can further avoid a welding operation for fixing the support bracket to the pillar, so that there is substantially no damaging to the anti-corrosion coating which is usually applied on the parts.

The complementary snap-fitting suspension elements are preferably formed by a resilient protruding element on the support bracket and a complementary hole or recess for accommodating the protruding element in the pillar. Alternatively, the resilient protruding element may be provided on the pillar and the hole or recess in the support bracket. Alternatively, any kind of complementary snap-fitting elements known to the person skilled in the art may be used.

In a preferred embodiment of the cable tray suspension assembly according to the invention, the pillar and the support bracket have complementary shaped parts which are formed by first and second tubular bodies, the dimensions of which are chosen such that the first tubular body tightly fits within the second tubular body or vice versa. The complementary snap-fitting suspension elements are preferably incorporated into opposing walls of the first and second tubular bodies. The tight fitting of the tubular bodies into each other along with the location of the suspension elements on their opposing walls has the advantage that the stability of the suspension assembly of the invention may be greatly enhanced, i.e. that the swinging of the pillar on the support bracket by whatever force can be suppressed.

Each pair of complementary snap-fitting suspension elements is preferably shaped such that assemblage of the support bracket and the pillar requires a smaller force than their disassemblage. This can prevent unwanted removal of the pillar from the support bracket, while simultaneously reducing the force for assemblage. In one embodiment, this effect is achieved in that the complementary suspension elements comprise a resilient protruding suspension lug and a complementary aperture which is shaped for accommodating the suspension lug, the suspension lug extending in a slanting direction which facilitates assembly and having a ridge for abutting the aperture and counteracting disassembly. However, other embodiments for achieving this effect are contemplated.

The embodiment of the previous paragraph is convenient if the suspension lugs are provided on the support bracket and the apertures are provided on the pillar as part of a sequence of apertures which also form the support elements for a cable tray or cable tray support. In this way, the pillar comprises only one kind of apertures and has a regular structure.

The support bracket and/or the pillar are preferably constructed by cutting and plying from a single blank of sheet metal. This maintains the production cost at a low level. The cutting and plying is preferably done such that the finished support bracket has one wall which comprises two halves formed by opposite ends of the blank of sheet metal, with each halve being provided with a fixing lip and the fixing lips overlapping each other. In this way, the weaker side of the support bracket comprising the separation between the ends of the blank is strengthened upon fixing to a ceiling or support beam. Each other wall of the support bracket is preferably also provided with a fixing lip, with all fixing lips being substantially coplanar.

The invention will be further elucidated by means of the following description with reference to the appended drawings.

Figure 1 shows a side view of a preferred embodiment of the cable tray suspension assembly according to the invention.

Figure 2 shows a perspective view of the embodiment of figure 1.

Figures 3 and 4 show perspective views of the support bracket of the cable tray suspension assembly of figure 1.

Figure 5 shows a side view of the support bracket of the cable tray suspension assembly of figure 1.

Figure 6 shows a top view of the support bracket of the cable tray suspension assembly of figure 1.

Figure 7 shows a blank from which the support bracket of figures 3-6 can be constructed by plying.

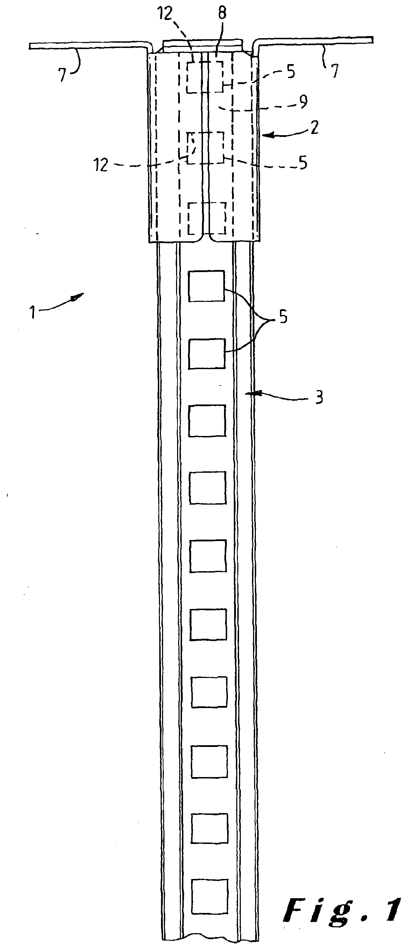

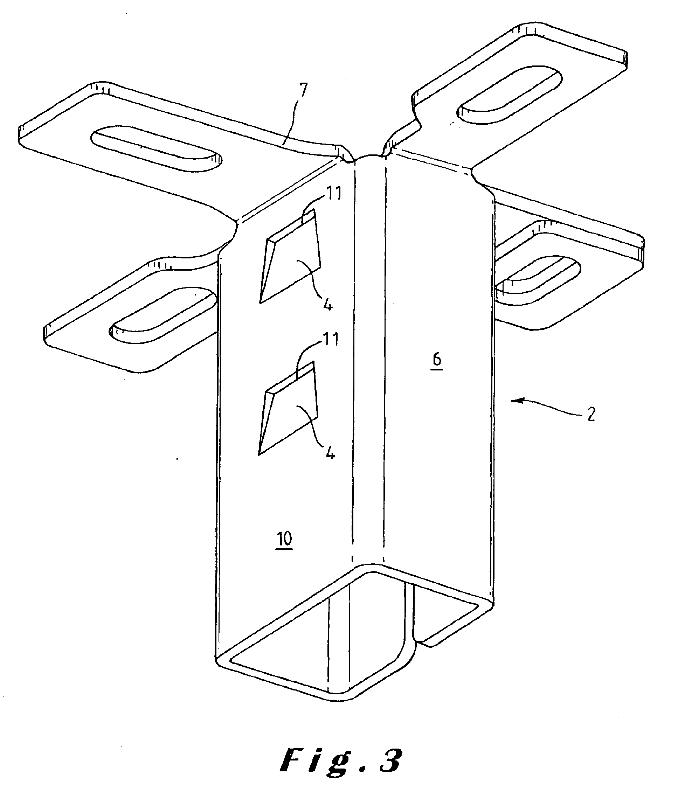

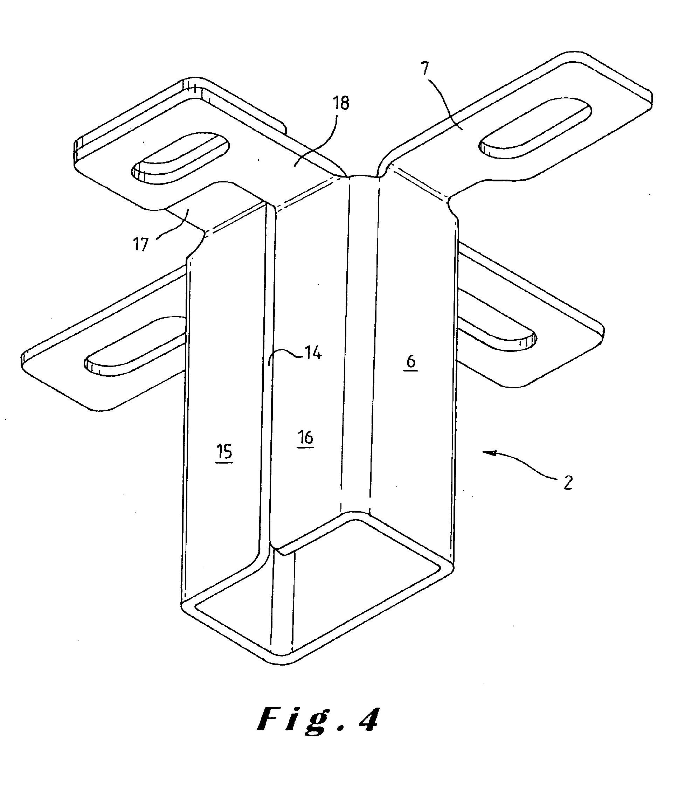

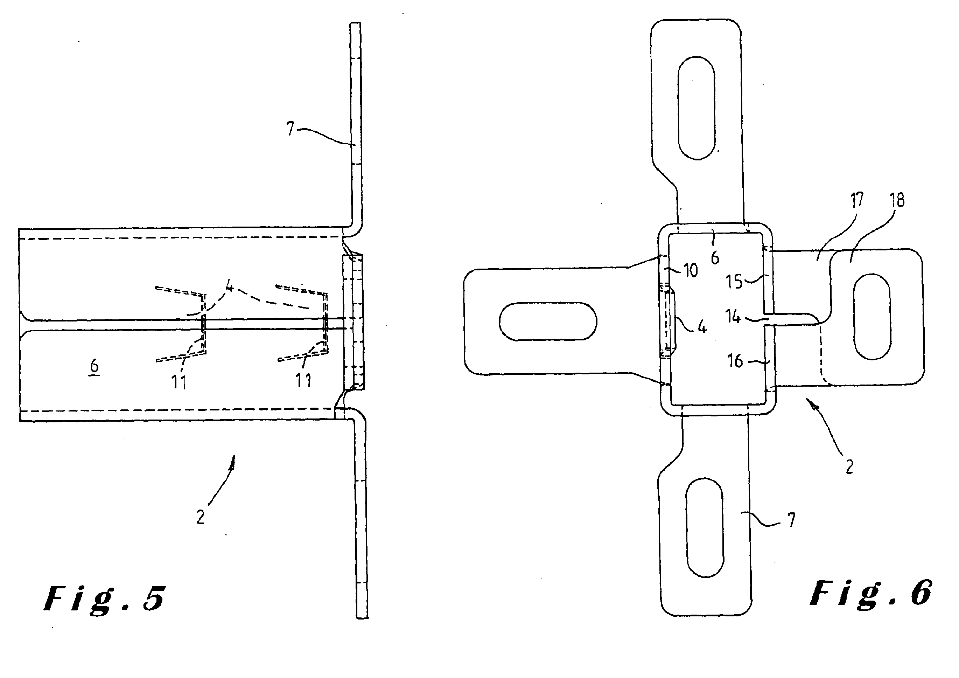

The suspension assembly 1 of figures 1-6 comprises a support bracket 2 and a pillar 3. The support bracket is provided to be fixed to a ceiling, a wall, a support beam or the like (not shown), to which end it comprises a number of fixing lips 7. The pillar 3 is provided with a series of apertures 5, which form support elements for attachment of a cable tray or a cable tray support (not shown). The pillar 3 is suspendable on the support bracket 2 by means of complementary snap-fitting suspension elements, more particularly resilient protruding suspension lugs 4 (see figure 3) on the support bracket 2 which in the assembled state protrude into the apertures 5 of the pillar 3.

The lugs 4 and apertures 5 form in combination a snap-fitting connection for the pillar 3 and the support bracket 2. The lugs 4 have a predetermined resiliency, defined by the material of the support bracket 2, such that the material of the pillar 3, more particularly the end portion 8 and the portion 9 in between the two uppermost apertures 5 in figure 1, can pass by the lugs 4 until they snap into the apertures 5. Alternatively, the lugs may also be provided on the pillar 3 and the apertures on the support bracket 2.

The pillar 3 and the support bracket 2 have complementary shaped parts which tightly fit into each other: the pillar 3 has a substantially rectangular profile which tightly fits into a tubular body 6 of the support bracket. The snap-fitting suspension element, i.e. the lugs 4 and apertures 5 are incorporated into opposing walls of the pillar 3 and the tubular body 4. This tight fitting can greatly enhance the stability of the suspension assembly 1.

As shown in figure 3, the lugs 4 are shaped such that the assemblage of the support bracket 2 and the pillar 3 requires a smaller force than their disassemblage. This is achieved by the fact that the lugs 4 protrude in an upwards slanting direction with respect to the wall 10 of the tubular body 6 towards the inside of the body 6, while upwards is also the direction in which the pillar is inserted into the body 6. Once the pillar 3 is fully inserted and the lugs 4 have snapped into the apertures 5, the top edges 11 of the lugs 4 abut the top edges 12 of the apertures 5 and form an obstruction against unwanted removal of the pillar 3 from the body 6.

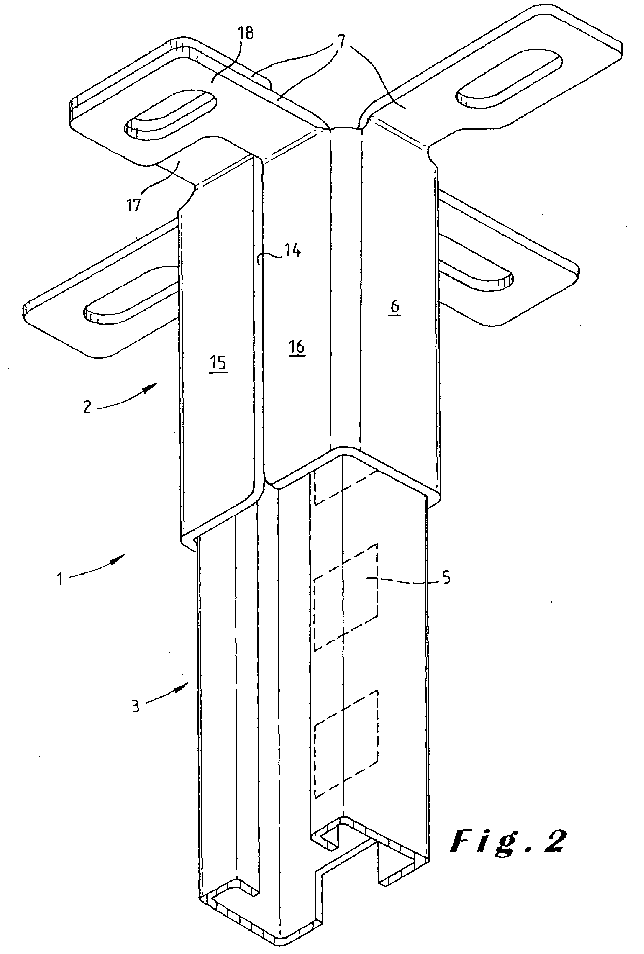

As shown in figure 2 and 3, the support bracket 2 comprises a number of fixing lips 7 with a central opening for receiving screws or bolts or like fixing means. In the embodiment shown, a fixing lip 7 is provided on each side of the tubular body 6, the lips 7 extending substantially perpendicular with respect to the side walls of the tubular body. The support bracket 2 may comprise more or less fixing lips, which may furthermore extend in non-perpendicular directions, or any other means for fixing the support bracket to the wall, ceiling or support beam, known to the person skilled in the art.

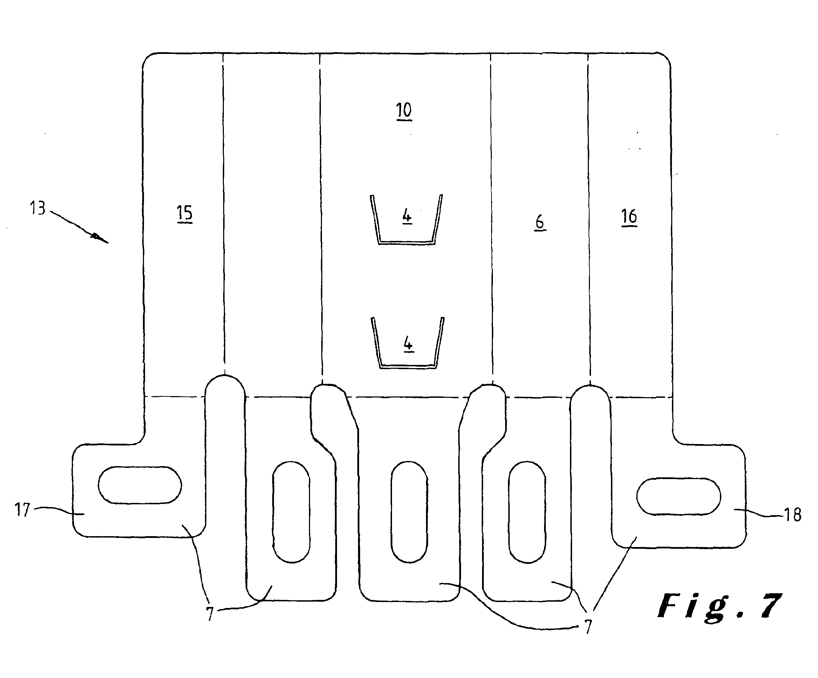

The support bracket 2 and the pillar 3 are preferably constructed by deforming a single blank of sheet metal, preferably plate steel or aluminium, but other metals or materials are of course possible. The blank 13 for the support bracket 2 is shown in figure 7. For constructing the support bracket 2 from this blank 13, it is deformed into a tubular part 6 for surrounding the pillar 3. The lugs 4 are cut into side wall 10 of the tubular part 6 and slightly bent inwards. On each side of the tubular part 6 at its top end, a fixing lip 7 is created by bending the previously cut lip over substantially 90° until it extends substantially perpendicular to the side walls of the tubular body. As a result of constructing the support bracket 2 from a single blank, it shows a slit 14 in height direction where the ends of the blank 13 meet. The plying is preferably performed such that the slit 14 is substantially in the middle of one side of the tubular body 6, which is thus formed by two halves 15, 16. On this open side of the tubular part 6, a double fixing lip 17, 18 is provided with one lip 17 attached to the left halve 15 and the other lip 18 attached to the right halve 16 and the lips 17, 18 overlapping each other. In this way, that the slit 14 is bridged and when the fixing means are placed (bolts, screws or other) the two halve sides 15, 16 are attached to each other and the firmness of the tubular body 6 as holder for the pillar 3 is enhanced.

The pillar 3 is over its entire length provided with a regular pattern of apertures 5 for attaching further parts of a cable tray assembly. In the figures, these apertures 5 are square, but they may also be triangular, rectangular, circular, oval or they may have any other shape known to the person skilled in the art. The pillar has an oblong shape, but may of course also have other shapes depending on the needs.

The assemblage of the cable tray suspension assembly of figures 1-6 can be performed by the following sequence of successive steps. First, the positions for the support brackets 2 of a part of a cableway are determined. Next, the support brackets 2 are fixed on these positions to the walls, ceiling or support beams. On a low level, for example on the ground, workers then attach cable tray sections to the pillars, if necessary by using cable tray supports as intermediary. In this way the part of the cableway is assembled, before it is lifted and suspended by snap-fitting the pillars onto the support brackets. As a result, the cable tray structure can be substantially fully assembled on the floor or at a low level, without requiring workers to stand on ladders or platforms except for the final step of suspending the cable tray structure. As a result, the safety of the workers can be enhanced with the suspension assembly of the invention, since the risk of falling from a ladder or height platform no longer exists during most of the assemblage. Furthermore, by the ability to assemble on the floor the assemblage becomes less tiring for the workers, since the number of steps to be performed with their arms raised is greatly reduced.

## Claims

1. Suspension assembly (1) for cable trays comprising a support bracket (2) which is provided to be fixed to a wall, a ceiling, a support beam or the like and a pillar (3) which is provided with support elements (5) for attachment of a cable tray or a cable tray support, the pillar (3) being suspendable on the support bracket (2), **characterised in that** the pillar and the support bracket together are provided with at least one pair of complementary snap-fitting suspension elements (4, 5).

2. Suspension assembly according to claim 1, **characterised in that** at least one pair of the complementary snap-fitting suspension elements is formed by a resilient protruding element (4) and a complementary hole or recess (5) for accommodating the protruding element (4).

3. Suspension assembly according to claim 1, **characterised in that** the pillar (3) and the support bracket (2) have complementary shaped parts which are formed by first and second tubular bodies (3, 6), the dimensions of which are chosen such that the first tubular body (3) tightly fits within the second tubular body (6) or vice versa, the complementary snap-fitting suspension elements (4, 5) being incorporated into opposing walls of the first and second tubular bodies.

4. Suspension assembly according to any one of the claims 1-3, **characterised in that** each pair of complementary snap-fitting suspension elements (4, 5) is shaped such that assemblage of the support bracket (2) and the pillar (3) requires a smaller force than their disassemblage.

5. Suspension assembly according to any one of the claims 1-4, **characterised in that** each pair of complementary snap-fitting suspension elements is formed by a resilient protruding suspension lug (4) and a complementary aperture (5) which is shaped for accommodating the suspension lug, the suspension lug (4) extending in a slanting direction which facilitates assembly and having a ridge (11) for abutting an edge (12) of the aperture (5) and counteracting disassembly.

6. Suspension assembly according to claim 5, **characterised in that** the suspension lugs (4) are provided on the support bracket (2) and the apertures (5) are provided on the pillar (3) as part of a sequence of apertures (5) which also form the support elements for a cable tray or cable tray support.

7. Suspension assembly according to any one of the previous claims, **characterised in that** the support bracket (2) and/or the pillar (3) are constructed by cutting and plying from a single blank (13) of sheet metal.

8. Suspension assembly according to claim 7, **characterised in that** the support bracket (2) has one wall which comprises two halves (15, 16) formed by opposite ends of the blank (13) of sheet metal, each halve (15, 16) being provided with a fixing lip (17, 18) which has an opening for receiving a bolt, by which the support bracket (2) is fixed to the ceiling or the support beam, the openings of the fixing lips (17, 18) of both halves (15, 16) overlapping each other.

9. Suspension assembly according to claim 7, **characterised in that** each other wall of the support bracket (2) is also provided with a fixing lip (7) which extends substantially coplanar with the fixing lips (17, 18) on the halves.

10. Support bracket as described in one of the claims 1-9 as part of a suspension assembly according to any one of the claims 1-9.
